# EUROPÄISCHE PATENTSCHRIFT

(11) **EP 0 597 134 B1**
(45) Veröffentlichungstag und Bekanntmachung des Hinweises auf die Patenterteilung: **02.07.1997**
(21) Anmeldenummer: 92119017.9
(22) Anmeldetag: 06.11.1992
(51) Int. Cl.: B26D 1/38, G06K 13/02

(54) **Vorrichtung zur Verarbeitung von kartenförmigen Datenträgern**
Device for processing card-shaped data carriers
Dispositif de traitement de porteurs d'informations en forme de cartes

(43) Veröffentlichungstag der Anmeldung: 18.05.1994
(73) Patentinhaber: SCHEIDT & BACHMANN GMBH, D-41238 Mönchengladbach (DE)
(72) Erfinder: Crynen, Norbert, Dipl.-Ing., 41179 Mönchengladbach (DE)
(74) Vertreter: Stenger, Watzke & Ring Patentanwälte

(56) Entgegenhaltungen:
- EP-A- 0 118 730
- DE-A- 2 336 028

## Beschreibung

Die Erfindung betrifft eine Vorrichtung zur Verarbeitung von kartenförmigen Datenträgern mit einer zylindrischen Aufnahmetrommel, die mit einem diametral durchgehenden Kartenschacht versehen und um mindestens 180° um eine quer zur Längsrichtung des Kartenschachtes verlaufende Achse verdrehbar gelagert ist.

Aus der EP-A1-0 118 730 sind Vorrichtungen zum Lesen und Beschreiben von Magnetkarten bekannt, die eine Dreh-Wende-Vorrichtung umfassen, so daß die zu verarbeitenden Magnetkarten der Vorrichtung in jeder möglichen Orientierung zugeführt werden können. Die zum Lesen und ggf. Beschreiben der kartenförmigen Datenträger notwendige Position wird mit Hilfe der Dreh-Wende-Vorrichtung erreicht.

In der älteren europäischen Patentanmeldung 91 110 111.1 ist darüber hinaus eine Dreh-Wende-Einrichtung beschrieben, die mit einer zylindrischen Aufnahmetrommel für die kartenförmigen Datenträger versehen ist. Die Kartentrommel umfaßt einen diametral durchgehenden Kartenschacht und ist um mindestens 180° um eine quer zur Längsrichtung des Kartenschachtes verlaufende Achse verdrehbar gelagert.

Der Erfindung liegt die **Aufgabe** zugrunde, eine Vorrichtung der voranstehend beschriebenen Art zur Verarbeitung von kartenförmigen Datenträgern derart weiterzubilden, daß in der Vorrichtung nicht nur eine Verarbeitung der kartenförmigen Datenträger möglich ist, sondern auch die Herstellung derartiger Kartenträger aus Kartenrohmaterial, das in der Vorrichtung in der jeweils gewünschten Weise kodiert und beschrieben wird.

Die **Lösung** dieser Aufgabenstellung durch die Erfindung ist dadurch gekennzeichnet, daß der Aufnahmetrommel mindestens ein Zufuhrkanal für Kartenrohmaterial zugeordnet ist und daß an der einen Seite der Mündung des Zufuhrkanals und an der gegenüberliegenden Seite des Endes des Kartenschachtes jeweils ein Messer derart befestigt ist, daß die Messer bei einer mindestens die Mündungsbreite des Zufuhrkanals überdeckenden Verdrehbewegung der Aufnahmetrommel einen das im Kartenschacht befindliche Kartenrohmaterial abtrennenden Schnitt ausführen.

Durch die erfindungsgemäße Weiterbildung der als bekannt vorausgesetzten Vorrichtung zur Verarbeitung von kartenförmigen Datenträgern wird es möglich, die in der Vorrichtung vorhandenen Einrichtungen zum Kodieren und Bedrucken auch zur Herstellung neuer kartenförmigen Datenträger heranzuziehen, die in der Vorrichtung aus Kartenrohmaterial hergestellt werden, welches der Aufnahmetrommel mittels jeweils eines Zufuhrkanals zugeführt wird. Beim Kartenmaterial kann es sich um Papier, Pappe, Dünn- oder Dickplastik handeln, wobei das Kartenrohmaterial entweder in Form einer Materialrolle oder eines gefalteten Materialstapels vorliegt. Durch Anordnung jeweils eines Messers einerseits am Ende des in der Aufnahmetrommel ausgebildeten Kartenschachtes und andererseits an der Mündung des Zufuhrkanals wird auf besonders einfache Weise eine Schneidvorrichtung geschaffen, die mit Hilfe des vorhandenen Drehantriebes der Aufnahmetrommel ein Abtrennen des jeweils kartenförmigen Datenträgers vom Kartenrohmaterial auf besonders einfache Weise bewirkt.

Die Messer sind gemäß einem weiteren Merkmal der Erfindung jeweils unter einem spitzen Winkel zu einer an den Außenumfang der Aufnahmetrommel angelegten Tangente angeordnet. Hierdurch ergibt sich ein einwandfreier Schneidvorgang, der weiterhin dadurch verbessert werden kann, daß die Schneidkante der Messer in Richtung der Breite des Zufuhrkanals bzw. Kartenschachtes schräg verläuft. Aus diesem schrägen Verlauf resultiert ein scherenartiger Schnitt.

Bei einer erfindungsgemäßen Weiterbildung der Schneidvorrichtung ist im Zufuhrkanal und/oder Kartenschacht mindestens eine federnde Führungszunge angeordnet, die in der Normalstellung eine Wirkung der Schneidkante des Messers auf das Kartenrohmaterial verhindert und in der Schnittstellung in Aussparungen des Zufuhrkanals bzw. des Kartenschachtes überführbar ist. Diese Ausgestaltung schafft einen ausreichenden Freischneidraum, wobei die Führungszunge um einen mindestens der größten Materialdicke entsprechenden Weg zurückgedrückt werden kann.

Um ein Ausweichen des Kartenrohmaterials während des Schneidvorganges zu vermeiden, ist gemäß einem weiteren Merkmal der Erfindung im Zufuhrkanal mindestens ein Rollen- oder Walzenpaar angeordnet, zwischen dessen Rollen oder Walzen das Kartenrohmaterial kraftschlüssig eingespannt ist und von dem mindestens eine Rolle oder Walze mittels eines Gesperres in der vom zugehörigen Messer wegführenden Drehrichtung gesperrt ist.

Bei einer bevorzugten Ausführungsform wird das Gesperre durch eine in eine Sperrverzahnung an der Rolle oder Walze eingreifende Sperrklinke gebildet.

Auf der Zeichnung ist ein Ausführungsbeispiel der erfindungsgemäßen Vorrichtung dargestellt, und zwar zeigen:
- Fig. 1: eine schematische Seitenansicht einer Vorrichtung und
- Fig. 2: eine vergrößerte Schnittdarstellung durch ein Ende des Kartenschachtes sowie die Mündung eines Zufuhrkanals.

Die auf den Zeichnungen nur schematisch dargestellte Vorrichtung umfaßt ein Gehäuse 1, in dem eine zylindrische Aufnahmetrommel 2 drehbar gelagert ist. Der Drehantrieb erfolgt über einen Zahnriemen 3 durch einen Schrittmotor 4. Im Gehäuse 1 ist außer einem Eingabekanal 5 ein Durchgangskanal 6 ausgebildet. Diese beiden Kanäle können durch einen in der Aufnahmetrommel 2 ausgebildeten Kartenschacht 2a miteinander verbunden werden. Sowohl im Eingabekanal 5 und Durchgangskanal 6 als auch im Kartenschacht 2a sind Transportmittel für die zu verarbeitenden kartenförmigen Datenträger angeordnet. Diese Transportmittel sind der besseren Übersicht wegen auf der Zeichnung nicht dargestellt.

Dem Eingabekanal 5 bzw. Durchgangskanal 6 sind weiterhin eine Kodier- und Leseeinheit sowie ein Drucker, vorzugsweise Thermodrucker zugeordnet. Diese auf der Zeichnung ebenfalls nicht dargestellten Bauteile können auch innerhalb des Gehäuses 1 angeordnet sein. Sie werden zum Kodieren, Lesen und Beschreiben der kartenförmigen Datenträger verwendet.

Um bei der Verarbeitung der Datenträger diese innerhalb des Gehäuses 1 zwischenlagern zu können, sind der Aufnahmetrommel 2 beim dargestellten Ausführungsbeispiel zwei Parkschächte 7a,7b zugeordnet, die mit ebenfalls auf der Zeichnung nicht dargestellten Transportmitteln versehen sind und durch eine geeignete Verdrehung der Aufnahmetrommel 2 mit Hilfe des Schrittmotors 4 angesteuert werden. Die Grundstellung der Aufnahmetrommel 2 wird beim Ausführungsbeispiel durch einen als Hallsensor ausgebildeten Positionsgeber 8 bestimmt. Ungültige, abgenutzte, entwertete oder auf andere Weise nicht entnommene Datenträger können über einen der Aufnahmetrommel 2 zugeordneten Karteneinzugkanal 9 einem Auffangbehälter 10 zugeführt werden.

Der Aufnahmetrommel 2 sind beim dargestellten Ausführungsbeispiel weiterhin drei Zufuhrkanäle 11a,11b,11c zugeordnet, über die der Aufnahmetrommel 2 Kartenrohmaterial 12a bzw. 12b bzw. 12c zugeführt wird. Hierbei handelt es sich um Rollen oder Stapel aus Papier, Pappe, Dünn- oder Dickplastik, die mit Mittel- und/oder Seiten-Magnetstreifen versehen sind. Dieses bis in die Mündung des jeweiligen Zufuhrkanals 11a bzw. 11b bzw. 11c eingeführte Kartenrohmaterial 12a bzw. 12b bzw. 12c wird durch eine geeignete Transportvorrichtung in den Kartenschacht 2a der Aufnahmetrommel 2 eingezogen, sobald die Aufnahmetrommel 2 zwecks Herstellung eines neuen kartenförmigen Datenträgers den jeweiligen Zufuhrkanal 11a bzw. 11b bzw. 11c angesteuert hat.

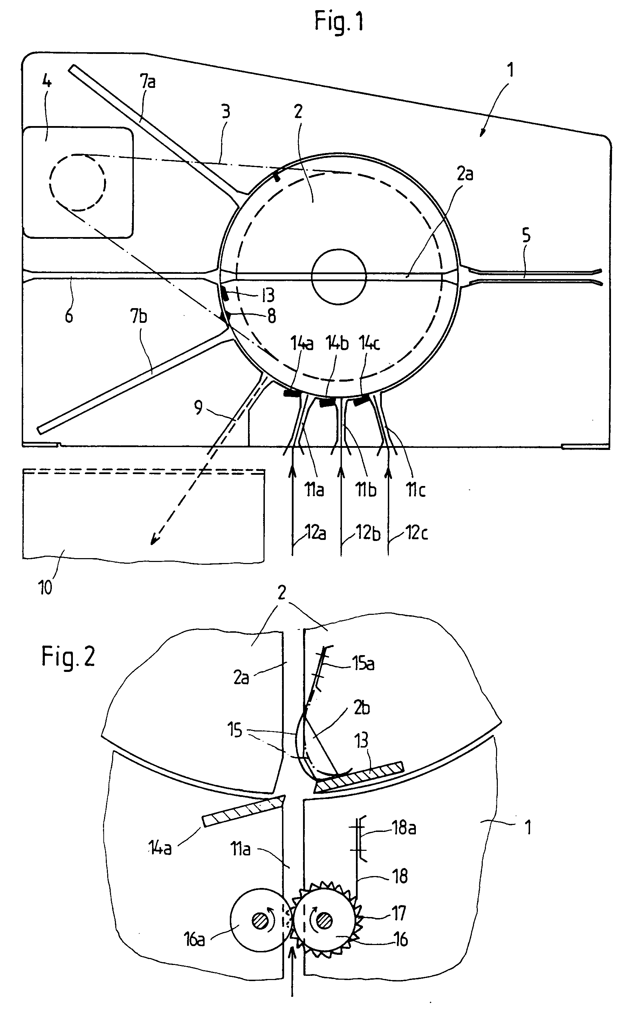

Um das in den Kartenschacht 2a der Aufnahmetrommel 2 befindliche Kartenrohmaterial von der jeweiligen Kartenrolle bzw. vom jeweiligen Kartenstapel abzutrennen, ist eine Schneidvorrichtung vorgesehen, die aus einem an einem Ende des Kartenschachtes 2a angeordneten Messer 13 sowie jeweils einem Messer 14a bzw. 14b bzw. 14c an der Mündung der Zuführkanäle 11a,11b,11c besteht. In Fig. 2 ist anhand einer vergrößerten Darstellung eines Zufuhrkanals 11a der grundsätzliche Aufbau dieser Schneidvorrichtung dargestellt.

Die Fig. 2 zeigt einen Teil der Aufnahmetrommel 2 mit einem Ende des Kartenschachtes 2a. Auf der einen Seite dieses Kartenschachtes 2a ist das Messer 13 angeordnet, und zwar unter einem spitzen Winkel zu einer an den Umfang der Aufnahmetrommel 2 angelegten Tangente. In der Ruhestellung wird die Schneide des Messers 13 durch eine federnde Führungszunge 15 abgedeckt, so daß sich ein glatter Übergang für das Kartenrohmaterial ergibt, wenn dieses in den Kartenschacht 2a eingeführt wird. Diese Normalstellung der Führungszunge 15 ist in Fig. 2 mit ausgezogenen Linien dargestellt. Die Führungszunge 15 ist an einer Halterung 15a an der Aufnahmetrommel 2 befestigt.

Auf der dem Messer 13 gegenüberliegenden Seite ist in der Mündung des in Fig. 2 dargestellten Zufuhrkanals 11a ein mit dem Messer 13 zusammenwirkendes Messer 14a angeordnet. Durch eine mindestens die Mündungsbreite des Zufuhrkanals 11a überdeckende Verdrehbewegung der Aufnahmetrommel 2 (in Fig. 2 in Uhrzeigerrichtung) kommen die Messer 13 und 14a in Kontakt, so daß das zwischen ihnen befindliche Kartenrohmaterial abgeschnitten wird. Auch das Messer 14a ist unter einem spitzen Winkel zu einer an den Umfang der Aufnahmetrommel 2 angelegten Tangente ausgerichtet. Außerdem können die Messer 13 und 14a in Richtung der Breite des Kartenschachtes 2a bzw. des Zufuhrkanals 11a schräg verlaufen, so daß sich ein scherenartiger Schnitt ergibt und die Scherwirkung so gering wie möglich gehalten wird.

Um einen ausreichenden Freischneidraum zu schaffen, ist die Aufnahmetrommel 2 oberhalb des Messers 13 mit einer Aussparung 2b versehen, in welche die Führungszunge 15 gemäß der strichpunktierten Darstellung in Fig. 2 zurückgedrückt wird, so daß das Kartenrohmaterial von den Schneiden der beiden Messer 13 und 14a sauber abgetrennt wird. Nach Beendigung des Schnittvorganges kehrt die federnde Führungszunge 15 selbsttätig in die mit ausgezogenen Linien dargestellte Normalstellung zurück.

Um während des Schnittvorganges ein Zurückdrücken des Kartenrohmaterials in den Zufuhrschacht 11a zu vermeiden, ist beim Ausführungsbeispiel im Zufuhrschacht 11a ein Paar aus zwei Walzen 16a,16b angeordnet. Zwischen diesen Walzen 16a und 16b wird das Kartenrohmaterial kraftschlüssig eingespannt. Die Walzen 16a und 16b können auch als Transportvorrichtung für das dem Kartenschacht 2a zuzuführende Kartenrohmaterial dienen. Mindestens die Walze 16b ist mittels eines Gesperres in der vom Messer 14a wegführenden Drehrichtung gesperrt. Beim Ausführungsbeispiel wird dieses Gesperre durch eine Sperrverzahnung 17 an der Walze 16b gebildet, in die eine an einer Halterung 18a befestigte Sperrklinke 18 eingreift. Mit der im unteren Teil der Fig. 2 dargestellten Vorrichtung ist es somit möglich, dem Kartenschacht 2a aus dem Zufuhrkanal 11a Kartenrohmaterial zuzuführen, jedoch dafür zu sorgen, daß bei Durchführung eines Schnittvorganges mit Hilfe der Messer 13 und 14a dieses Kartenrohmaterial nicht in den Zufuhrkanal 11a zurückgedrückt wird.

### Bezugszeichenliste:

- 1: Gehäuse
- 2: Aufnahmetrommel
- 2a: Kartenschacht
- 2b: Aussparung
- 3: Zahnriemen
- 4: Schrittmotor
- 5: Eingabekanal
- 6: Durchgangskanal
- 7a: Parkschacht
- 7b: Parkschacht
- 8: Positionsgeber
- 9: Karteneinzugkanal
- 10: Auffangbehälter
- 11a: Zufuhrkanal
- 11b: Zufuhrkanal
- 11c: Zufuhrkanal
- 12a: Kartenrohmaterial
- 12b: Kartenrohmaterial
- 12c: Kartenrohmaterial
- 13: Messer
- 14a: Messer
- 14b: Messer
- 14c: Messer
- 15: Führungszunge
- 15a: Halterung
- 16a: Walze
- 16b: Walze
- 17: Sperrverzahnung
- 18: Sperrklinke
- 18a: Halterung

## Patentansprüche

1. Vorrichtung zur Verarbeitung von kartenförmigen Datenträgern mit einer zylindrischen Aufnahmetrommel (2), die mit einem diametral durchgehenden Kartenschacht (2a) versehen und um mindestens 180° um eine quer zur Längsrichtung des Kartenschachtes (2a) verlaufende Achse verdrehbar gelagert ist,
**dadurch gekennzeichnet,**
daß der Aufnahmetrommel (2) mindestens ein Zufuhrkanal (11a,11b,11c) für Kartenrohmaterial (12a,12b,12c) zugeordnet ist und daß an der einen Seite der Mündung des Zufuhrkanals (11a,11b,11c) und an der gegenüberliegenden Seite des Endes des Kartenschachtes (2a) jeweils ein Messer (13,14a,14b,14c) derart befestigt ist, daß die Messer (13,14a,14b,14c) bei einer mindestens die Mündungsbreite des Zufuhrkanals (11a,11b,11c) überdeckenden Verdrehbewegung der Aufnahmetrommel (2) einen das im Kartenschacht (2a) befindliche Kartenrohmaterial (12a,12b,12c) abtrennenden Schnitt ausführen.

2. Vorrichtung nach Anspruch 1, dadurch gekennzeichnet, daß die Messer (13,14a,14b,14c) jeweils unter einem spitzen Winkel zu einer an den Außenumfang der Aufnahmetrommel (2) angelegten Tangente angeordnet sind.

3. Vorrichtung nach Anspruch 1 oder 2, dadurch gekennzeichnet, daß die Schneidkante der Messer (13,14a,14b,14c) in Richtung der Breite des Zufuhrkanals (11a,11b,11c) bzw. des Kartenschachtes (2a) schräg verläuft.

4. Vorrichtung nach mindestens einem der Ansprüche 1 bis 3, dadurch gekennzeichnet, daß im Zufuhrkanal (11a,11b,11c) und/oder Kartenschacht (2a) mindestens eine federnde Führungszunge (15) angeordnet ist, die in der Normalstellung eine Wirkung der Schneidkante des Messers (13,14a,14b,14c) auf das Kartenrohmaterial (12a,12b,12c) verhindert und in der Schnittstellung in eine Aussparung (2b) des Zufuhrkanals (11a,11b,11c) bzw. des Kartenschachtes (2a) überführbar ist.

5. Vorrichtung nach mindestens einem der Ansprüche 1 bis 4, dadurch gekennzeichnet, daß im Zufuhrkanal (11a,11b,11c) mindestens ein Rollen- oder Walzenpaar (16a,16b) angeordnet ist, zwischen dessen Rollen oder Walzen (16a,16b) das Kartenrohmaterial (12a,12b,12c) kraftschlüssig eingespannt ist und von dem mindestens eine Rolle oder Walze (16b) mittels eines Gesperres in der vom zugehörigen Messer (14a,14b,14c) wegführenden Drehrichtung gesperrt ist.

6. Vorrichtung nach Anspruch 5, dadurch gekennzeichnet, daß das Gesperre durch eine in eine Sperrverzahnung (17) an der Rolle oder Walze (16b) eingreifende Sperrklinke (18) gebildet ist.

## Claims

1. Device for processing card-shaped data carriers, having a cylindrical holding drum (2) which is provided with a card slot (2a) passing diametrically through it and is supported so as to be able to be rotated through at least 180° about an axis extending transversely to the longitudinal direction of the card slot (2a), characterized in that the holding drum (2) is assigned at least one feed channel (11a, 11b, 11c) for card raw material (12a, 12b, 12c), and in that a knife (13, 14a, 14b, 14c) is in each case fastened on one side of the opening of the feed channel (11a, 11b, 11c) and on the opposite side of the end of the card slot (2a) in such a way that, during a rotational movement of the holding drum (2), which movement covers at least the width of the opening of the feed channel (11a, 11b, 11c), the knives (13, 14a, 14b, 14c) execute a cut severing card raw material (12a, 12b, 12c) in the card slot (2a).

2. Device according to Claim 1, characterized in that the knives (13, 14a, 14b, 14c) are in each case arranged at an acute angle to a tangent drawn to the outer circumference of the holding drum (2).

3. Device according to Claim 1 or 2, characterized in that the cutting edge of the knives (13, 14a, 14b, 14c) runs obliquely in the direction of the width of the feed channel (11a, 11b, 11c) or, respectively, in the card slot (2a).

4. Device according to at least one of Claims 1 to 3, characterized in that there is arranged in the feed channel (11a, 11b, 11c) and/or card slot (2a) at least one sprung guide tongue (15) which, in the normal position, prevents the cutting edge of the knife (13, 14a, 14b, 14c) acting on the card raw material (12a, 12b, 12c), and in the cutting position, can be transferred into a cutout (2b) in the feed channel (11a, 11b, 11c) or, respectively, in the card slot (2a).

5. Device according to at least one of Claims 1 to 4, characterized in that at least one pair of rollers or rolls (16a, 16b) is arranged in the feed channel (11a, 11b, 11c), the card raw material (12a, 12b, 12c) is tensioned frictionally between these rollers or rolls (16a, 16b), and at least one roller or roll (16b) of the pair is blocked in the direction of rotation leading away from the associated knife (14a, 14b, 14c) by means of a blocking means.

6. Device according to Claim 5, characterized in that the blocking means is formed by a pawl (18) engaging in a ratchet toothing (17) on the roller or roll (16b).

## Revendications

1. Dispositif de traitement de supports d'informations en forme de cartes, avec un tambour récepteur cylindrique (2) qui est muni d'un puits de carte (2a) le traversant diamétralement et qui est logé de manière à pouvoir tourner d'au moins 180° autour d'un axe s'étendant perpendiculairement au sens de la longueur du puits de carte (2a),
caractérisé en ce que
au moins un canal d'alimentation (11a, 11b, 11c) destiné à un matériau brut pour carte (12a, 12b, 12c) est associé au tambour récepteur (2) et une lame (13, 14a, 14b, 14c) est fixée à chaque fois sur un côté du débouché du canal d'alimentation (11a, 11b, 11c) et sur le côté opposé de l'extrémité du puits de carte (2a) de telle sorte que les lames (13, 14a, 14b, 14c), lors d'un mouvement de rotation du tambour récepteur (2) couvrant au moins la largeur de débouché du canal d'alimentation (11a, 11b, 11c), effectuent une coupe séparant le matériau brut pour carte (12a, 12b, 12c) se trouvant dans le puits de carte (2a).

2. Dispositif selon la revendication 1, caractérisé en ce que les lames (13, 14a, 14b, 14c) sont agencées chacune selon un angle aigu par rapport à une tangente à la circonférence extérieure du tambour récepteur (2).

3. Dispositif selon la revendication 1 ou 2, caractérisé en ce que le tranchant des lames (13, 14a, 14b, 14c) s'étend obliquement en direction de la largeur du canal d'alimentation (11a, 11b, 11c) ou du puits de carte (2a).

4. Dispositif selon au moins l'une des revendications 1 à 3, caractérisé en ce qu'au moins une languette de guidage (15) élastique est agencée dans le canal d'alimentation (11a, 11b, 11c) et ou dans le puits de carte (2a), cette languette de guidage empêchant en position normale une action du tranchant de la lame (13, 14a, 14b, 14c) sur le matériau brut pour carte (12a, 12b, 12c) et pouvant être placée en position de coupe dans un évidement (2b) du canal d'alimentation (11a, 11b, 11c) ou du puits de carte (2a).

5. Dispositif selon au moins l'une des revendications 1 à 4, caractérisé en ce qu'au moins une paire de rouleaux ou de cylindres (16a, 16b) est agencée dans le canal d'alimentation (11a, 11b, 11c), le matériau brut pour carte (12a, 12b, 12c) étant encastré par adhérence entre ces rouleaux ou cylindres (16a, 16b) et au moins un rouleau ou cylindre (16b) étant bloqué au moyen d'un dispositif d'encliquetage dans le sens de rotation éloignant de la lame associée (14a, 14b, 14c).

6. Dispositif selon la revendication 5, caractérisé en ce que le dispositif d'encliquetage est formé par un cliquet d'arrêt (18) s'engrenant dans une denture d'arrêt (17) sur le rouleau ou cylindre (16b).
